# EUROPEAN PATENT SPECIFICATION

(11) **EP 1 060 970 B1**
(45) Date of publication and mention of the grant of the patent: **18.08.2004**
(21) Application number: 00304303.1
(22) Date of filing: 22.05.2000
(51) Int. Cl.: B61F 5/02, F16F 7/01

(54) **Connection member for a railway vehicle, to hinder vibration transmission**
Verbindungselement für ein Schienenfahrzeug, zum Verhindern von Schwingungsübertragungen
Elément de raccordement pour un véhicule ferroviaire, prévenant la transmission de vibrations

(30) Priority: 20.05.1999 JP 13967299; 24.09.1999 JP 26985399; 01.02.2000 JP 2000028888
(43) Date of publication of application: 20.12.2000
(60) Divisional application: 04006993.2
(73) Proprietor: Hitachi, Ltd., Chiyoda-ku, Tokyo 101-8010 (JP)
(72) Inventor: Sebata, Michio, Kudamatsu-shi, Yamaguchi 744-0061 (JP); Makino, Toshiaki, Kudamatsu-shi, Yamaguchi 744-0062 (JP); Hiraishi, Motomi, Kudamatsu-shi, Yamaguchi 744-0011 (JP); Nakamura, Minoru, Kudamatsu-shi, Yamaguchi 744-0042 (JP)
(74) Representative: Paget, Hugh Charles Edward

(56) References cited:
- WO-A-85/05425
- DE-A- 2 533 088
- US-A- 5 690 034
- US-A- 5 775 049

## Description

### Field of the Invention

The present invention relates to a connection member for a railway vehicle, particularly to a railway bogie vehicle. The invention also relates to a railway vehicle or bogie having such a connection member.

### Background of the Invention

As stated in Japanese application utility model publication No. Sho 58-1406, the bogie frame and the car body of a bogie vehicle are connected by a traction link (hereinafter, referred to as a "link"). At both ends of the link, namely in the forward and backward directions, a rubber bush is arranged. The rubber bush is designed to resist compression load which occurs sometimes in the forward and backward directions. The rubber bush is also for running stability. Further, the bogie and the car body are connected by a yaw damper.

US-A-5690034 also shows a link member between a bogie and a car body.

A sound shielding panel using shaped particles is described in Japanese patent application laid-open No. Hei 10-266388. In this panel, in a floor of a car body using an aluminum honeycomb panel, in an interior portion of the panel, powders having a particle size of 30 to 1000 µm are received. Damping in the up and down direction of the floor of the car body is achieved.

Vibration in the forwards and backwards directions (the running direction of the vehicle) which is generated in the bogie is transmitted to the two rubber bushes and the link, and through a connection portion of the yaw damper. For this reason, noise in the car may become high. In particular, a solid propagation vibration having a rotation frequency component in the 80 to 300 Hz band is transmitted from the bogie and this vibration may vibrate the floor. Accordingly there is a problem of increase of noise in the car.

In the vibration generated by a rotational unbalance in a drive system, a component having a size of less than 10 m/s² from one time to three times the rotation vibration component f1 of an electric motor shaft is comparatively noticeable. These rotation vibration components f1-3f1 are transmitted as a solid propagation vibration to the car body through the link, to become up and down vibration of the floor of the car body, and appear as noise in the car.

During acceleration of the car in running, the two times (2f1) component generates in the forward and backwards direction, in the right and left direction, and in the up and down direction. In particular the vibration in the forward and backward direction tends to increase noise in the car. Further, during deceleration and coasting, the increase in the forward and backward vibration of the one times (f1) component to the three times (3f1) component occurs remarkably. For example, when f1 is 80 Hz, 2f1 is 160 HZ, and 3f1 is 240 Hz. For this reason, it is required to reduce the vibration at about more than 100 Hz.

US-A-5775049 shows a damped structural member in the form of a box beam containing loose particles which absorb vibration, which may be applied to railway cars. The particles are of glass or low density polyethylene.

### Summary of the Invention

An object of the present invention is to reduce noise in a railway car by a simple construction.

The above stated object can be attained by a connection member as set out in claim 1. The connection member may be a traction link, a yaw damper, a right and left move damper, between car bodies, a bolster anchor etc.

In the present invention, vibration energy generated in the connection member is changed to kinetic energy by collisions of the particles, and vibration at the connection member is reduced. For this reason, propagation of the vibration to the car body can be restrained and noise in the car can be reduced.

Noise in the car is generated by the vibration of the floor face of the car body. A vibration source is a rotation unbalance of a drive system of the car body. The connection member of the invention is arranged between the vibration source and floor face of the car body and mainly vibrates in the forward and backward direction. The particles of the connection member move in the forward and backward direction. For this reason, in the movement of the particles since it is unnecessary to have the vibration of 10 m/s² which goes against gravity, the substance moves actively in response to a small excitation force. Accordingly, vibration of the floor face of the car body can be restrained, and noise in the car can be reduced.

Since the connection member can be of comparatively light weight, the vibration can be restrained by a simple apparatus.

### Brief Description of Drawings

Fig. 1 is a side view showing a traction link of one embodiment according to the present invention;
Fig. 2 is an enlarged view of a portion of Fig. 1;
Fig. 3 is a plan view on the link of Fig. 2;
Fig. 4 is a sectional view on line IV-IV of Fig. 2;
Fig. 5 is a plan view showing a bogie to which one embodiment according to the present invention is installed;
Fig. 6 is an explanatory view showing a vibration characteristic of the bogie car;
Fig. 7 is a graph showing the effect of one embodiment according to the present invention;
Fig. 8 is a graph showing the effect of a second embodiment according to the present invention;
Fig. 9 is a graph showing the effect of a third embodiment according to the present invention;
Fig. 10 is a graph showing the effect of a fourth embodiment according to the present invention;
Fig. 11 is a graph showing the effect of a fifth embodiment according to the present invention;
Fig. 12 is a longitudinal cross-sectional view showing a damping apparatus of another embodiment according to the present invention;
Fig. 13 is a longitudinal cross-sectional view showing a damping apparatus of a further embodiment according to the present invention;
Fig. 14 is a graph in which a relationship between a damping effect and a mass are summarized;
Fig. 15 is a side view showing a traction link of another embodiment according to the present invention; and
Fig. 16 is a central longitudinal cross-sectional view of Fig. 28.

### Description of the Embodiments

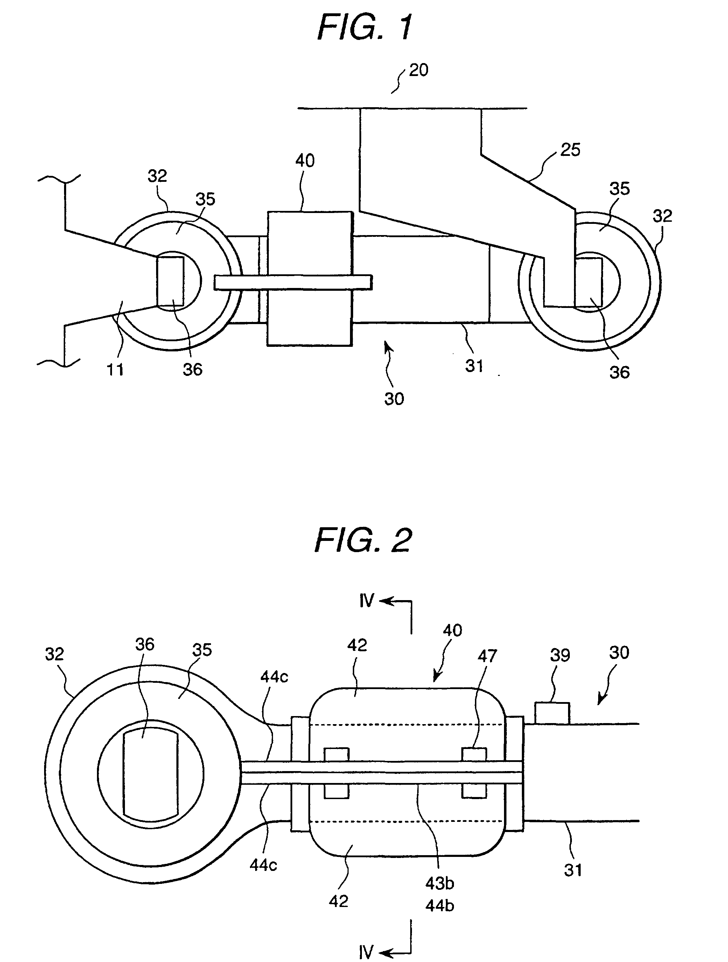

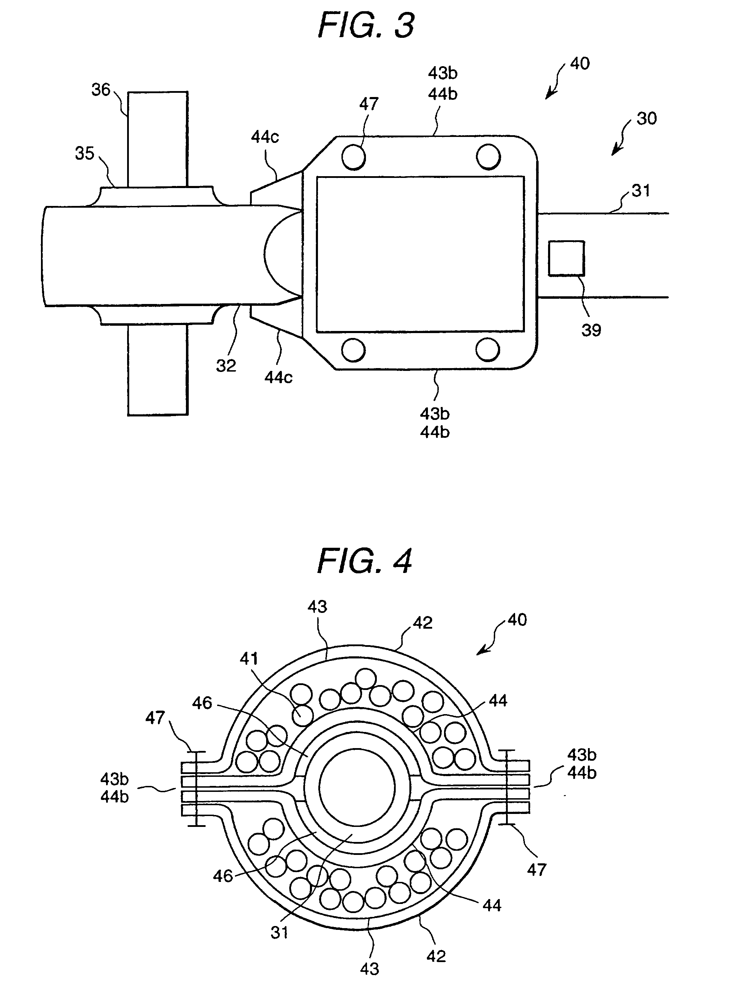

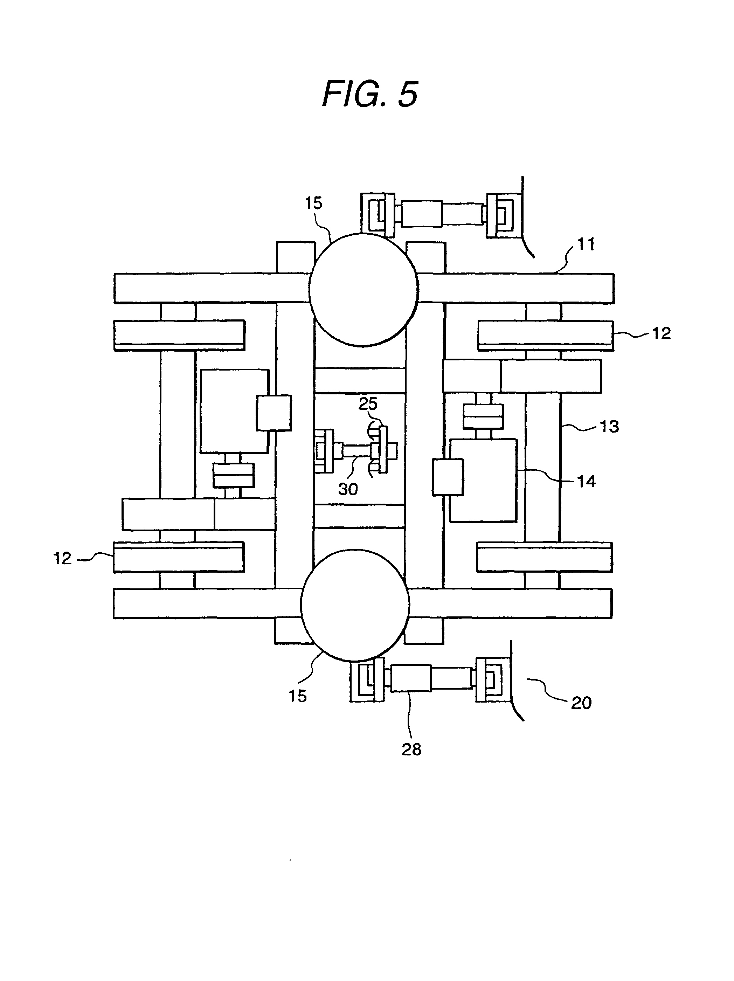

One embodiment of a railway bogie car according to the present invention will be explained referring to Figs. 1 to 5. A bogie frame 11 (Fig. 5) of the bogie car is supported by two car axles 13 having running wheels 12 and carries a drive which comprises an electric motor 14 for driving the axles 13 and reduction gears. The bogie frame 11 supports the car body 20 through air spring members 15.

A connection member 25 (in general, it is called "a centre pin") projects down from a lower face of the car body. This member 25 connects the body and the bogie frame 11 by a traction link 30 (herein, called "link"). The link 30 transmits forwards and backwards force and is arranged horizontally in the running direction.

End portions at right and left sides of the bogie frame 11 are connected to the car body 20 through yaw dampers 28. The end portions of each yaw damper 28 are connected to the bogie frame 11 and the car body 20 through rubber bushes similarly to the link 30. The yaw damper 28 prevents meandering movement during running. Further, a right and left movement damper (not shown in figure) for preventing the right and left direction vibration of the car body 20 is installed between the car body 20 and the bogie 11.

Both end portions of the link 30 are connected to the bogie 11 and the connection member 25 through a rubber bush 35 and a pin 36, etc. The connection member 25 is arranged inclined to provide a connection between the car body 20 and the link 30. The cross-section of a lower end portion of the connection member 25 is an inverted U shape. The inclined portion extends in the travel direction of the car body 20. The link 30 is arranged horizontally in the travel direction of the car body and penetrates the U shape portion. A centre portion of the link 30 is a cylindrical portion 31.

Since the vibration of a drive system of the electric motor 14, the reduction gearing thereof and a shaft coupling is transmitted to the car body 20 through the link 30, hereinafter, an example in which the vibration countermeasure is performed at the link 30 will be explained.

At an outer periphery of the cylindrical portion 31 of the link 30 adjacent the connection to the bogie car frame 11 a damping apparatus is installed. At the connection to the connection member 25, such a damping apparatus is not installed.

The damping apparatus has a vessel 40 which receives particles 41. The vessel 40 is divided into two vessels 42 at an upper portion and a lower portion. The divided vessels 42 at the upper portion and the lower portion comprise outer side plates 43 having a semi-circular shape cross-section and inner side plates 44 having a semi-circular shape cross-section. The inner side plate 44 surrounds the cylindrical portion 31. After the particles 41 are inserted, the four sides of the pairs of plates 43 and 44 are spot-welded at horizontal flanges 43b and 44b, to make a unitary vessel 40. At the joint of the plates 43 and 44 a sealing agent is coated to protect against water. The plates 43 and 44 are manufactured by press processing etc.

In place of the spot welding the whole periphery is welded, and the sealing agent can be omitted. An insertion hole may be provided to enable the particle shape member 41 to be inserted from outside.

To an arc shape inner face of the inner side plate 44, a rubber sheet 46 is adhered. The flanges 43b and 44b which extend in the axial direction of the link 30 are connected by a bolt 47 and fixed to an outer face of the link 30. The outer face of the link 30 is a circular shape. The semi-circle shape of an inner side of the inner side plate 44 is determined in response to the diameter of the link 30.

To the outer side plate (the vessel) 43 in a condition in which the particles 41 having a predetermined weight have been inserted, the inner side plate 44 is overlapped and covered and the flanges 43b and 44b are connected by the spot welding.

End portions 44c at the bogie frame 11 side of the inner side plate 44 are projected to oppose a flat portion of the coupling 32 of the end portion of the link 30. An end portion of the link 30 has a large diameter to receive the rubber bush 35. An end face of the coupling 32 in an insertion direction (an axial direction) of the rubber bush 35 and the pin 36 has a flat face. The projections 44c are overlapped to the flat face. For this reason, even if a fixing force of the bolt 47 is small, the damping apparatus 40 is not rotated.

Further, to prevent movement in the axial direction of the link 30, to the outer face of the cylindrical portion 31 a fixing chip 39 is welded. A base portion of the projections 44c is positioned at a vicinity of the coupling 32 and lateral movement of the coupling 32 is prevented.

Each particle 41 is a spherical body of an iron-based or a lead-based material. Particle size is in the range 0.1 to 10 mm. When the fill density of the particles 41 is small, the attenuation effect is small. When the fill density is large, the movement of the particles 41 becomes bad and then the vibration damping effect can be lessened. A fill density of 70-95% is preferable.

The fill density will be explained. For example, when particles 41 having a particle diameter of 1 mm are used, these particles are filled fully in the vessel and their weight is measured. This condition is the fill density of 100%. The fill density of 70% is relative to this 100% fill density for the same particles, by weight.

Further, to carry out a rust prevention and a corrosion prevention or an abrasion prevention, an absorption material (for example, a red ocher) can be enclosed.

In proportion as the weight ratio of the particles 41 becomes large, and the damping effect becomes large, it is preferable to use particles 41 having a large specific gravity. For example, it is preferable to use the lead-based material, which is comparatively cheap. When the specific gravity is large, the size of the vessel for receiving the particles 41 can be small. Further, since a small diameter of the particles 41 invites high cost, in general a diameter of 1 mm or more is preferable. When the diameter of the particles 41 is small, the fill density becomes large, and it is possible to make the vessel small.

With this construction, when the link 30 vibrates according to the vibration of the drive system, the particles 41 vibrate, and by the collision of the particles 41 with each other and with the plates 43 and 44 (since the plates are made as one body with the link 30) a frictional or damping resistance arises in the particles 41. For this reason, the vibration in the damping apparatus 40 is reduced, and vibration in the link 30 is absorbed. Further, in proportional to the increase in a specific gravity, the vibration energy of the link 30 is converted by the collisions to kinetic energy of the particles 41 with good efficiency.

Accordingly, the vibration energy becomes small and the vibration of the link 30 can be reduced. In particular, according to the vibration of the drive system, since movement in the forwards and backwards direction of the particles 41 in the interior of the damping apparatus 40 is unnecessary to resist (it is unnecessary to have the vibration of more than 10 m/s²), with the small excitation force it can active. For this reason, the vibration in the forwards and backwards direction which is solid-propagated to the car body side from the link 30 can be reduced. Accordingly, vibration in the up and down direction at the floor face of the car body is reduced, and the noise in the car which propagates from the floor face can be reduced.

Namely, to absorb the 2f1 vibration component which is comparatively strong during acceleration, by the forwards and backwards vibration which solid propagates through the link 30, the particles 41 repeatedly undergo collision at short range. For this reason, the vibration energy generated in the link 30 is converted to the kinetic energy. By the frictional resistance of the particles the vibration is reduced. Accordingly, the vibration at the link 30 can be reduced.

In comparison with the known case where the powder shape member is installed to the floor face of the car body 20, the reduction of the vibration in the forwards and backwards direction of the link 30, which occurs before the vibration is diffused to the floor face of the car body 20, has large effect. Against the vibration in the forwards and backwards direction, even considering the small excitation force, the particles 41 move actively (it is unnecessary to have the vibration of more than 10 m/s² which resists gravity). Accordingly, since the forwards and backwards vibration at the link 30 is restrained, the increase in the up and down vibration on the floor face of the car body 20 can be restrained, and the noise in the car can be reduced. Further, since the link 30 has a comparatively low weight, the vibration can be reduced by light weight apparatus.

Further, during acceleration and deceleration and coasting in running, since the vibration in the forwards and backwards direction at the link 30 increases further, the damping effect can be remarkably reduced further. The movement of the particles 41 in this case, against the large excitation force, is actively larger, so that the damping effect can be increased.

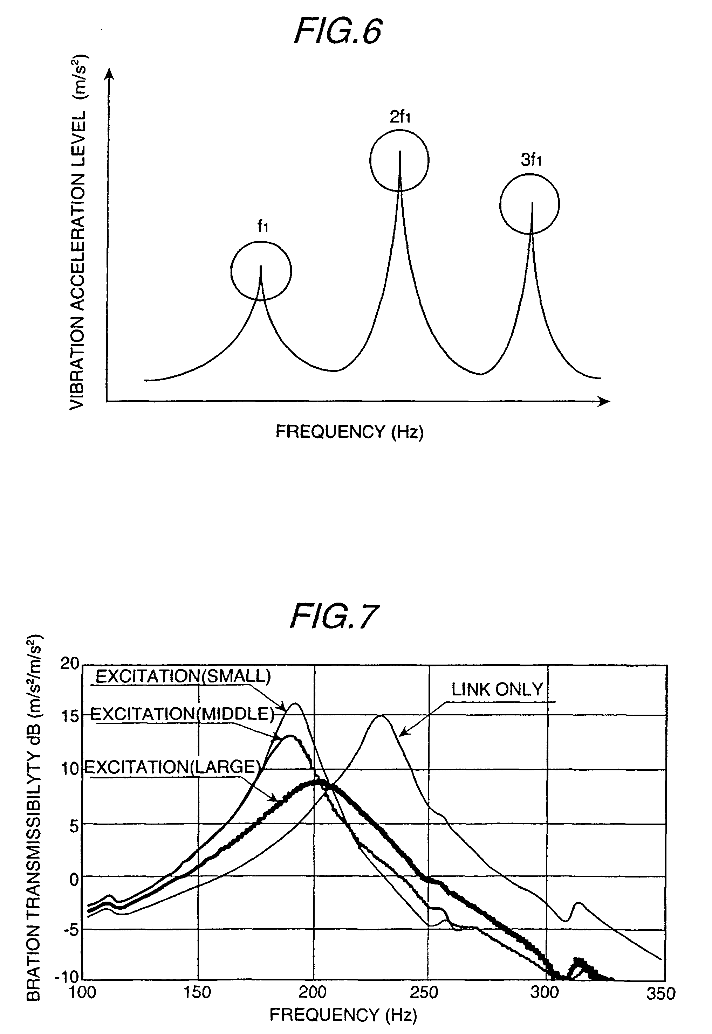

The damping effect of the particles 41 in a test will be shown by Figs. 7 to 11. In this test the pins 36 at the two ends of the link 30 were fixed to a tool, in which the pin 36 at one end was excited by a dynamo-electric type vibration exciter and a vibration transmission in the cylindrical portion 31 of the link 30 was measured. The link 30 is one which is used in an actual product and at both ends of the link 30 has the pins 36 through the rubber bushes 35. The pin 36 at one end was connected to the dynamo-electric type vibration exciter. A vibration measurement means was connected to an output portion of the dynamo-electric type vibration exciter and the cylindrical portion 31 of the link 30. The vibration transmission is a ratio of the vibration acceleration of the link 30 against the vibration acceleration at the vibration exciter.

In Figs. 7 to 11, an "excitation (small)" is a case in which the excitation vibration is 0.1 m/s², an "excitation (middle)" is a case in which the excitation vibration is 0.25 m/s² and an "excitation (large)" is a case in which the excitation vibration is 0. 5 m/s². The "excitation (small)", the "excitation (middle)", and the "excitation (large)" were with the damping apparatus according to the present invention installed. A "link (only)" is a case of the link 30 according to the prior art and the excitation vibration was 0.5 m/s². In the case of the link 30 according to the prior art, the excitation vibration is changed to the above stated "excitation (middle)", and the above stated "excitation (large)", the vibration transmission characteristic is similar to that of 0.5 m/s².

The particles 41 of the damping apparatus 40 were of a lead-based material and the particle size is 1 mm. Their weight ratio relative to the link 30 (the rubber bush and the pin are included) is 28%, and the fill density is about 95%.

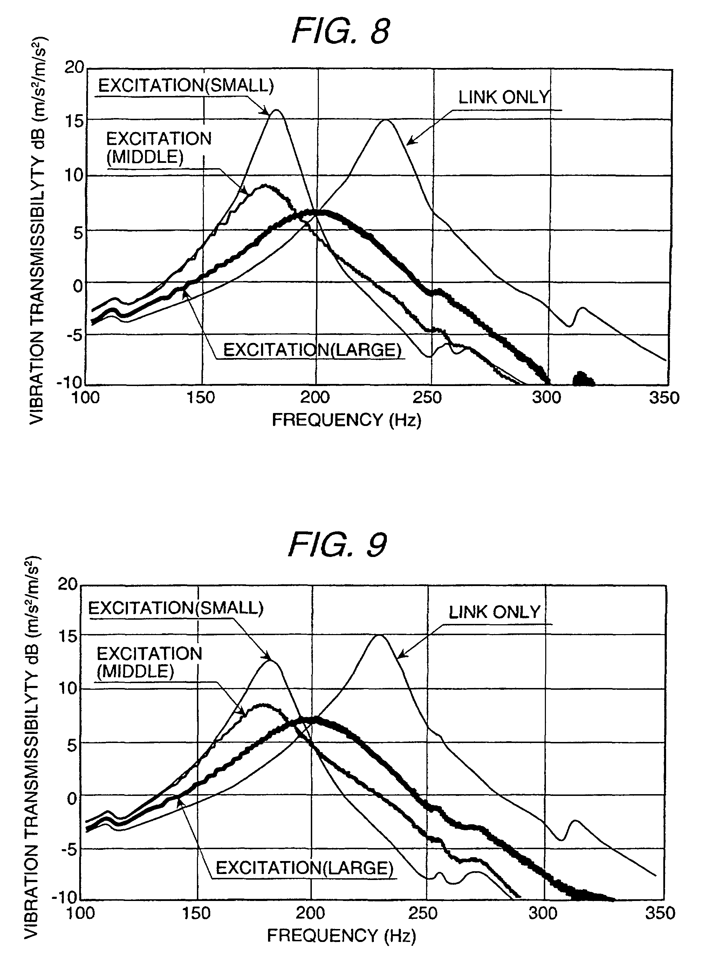

In Fig. 7 and Fig. 8, the damping apparatus 40 is provided to the outer peripheral portion of the link 30 but the rubber sheet 46 is not provided.

In Fig. 7, when the excitation vibration is small, a peak frequency of the link 30 is lowered about 40 Hz by the weight increase of the particle shape member 41, etc. When the excitation vibration is increased the peak frequency approaches to an original frequency, but the vibration transmission ratio is reduced. The damping effect at above 200 Hz band can be about -6 dB, when the excitation vibration width is large.

Fig. 8 shows a case where in addition to the damping apparatus which is installed to the outside portion shown in Fig. 7 particles 41 are enclosed in the cylindrical portion 31 of the link 30. The coupling 32 for fixing the rubber bushes 35 at both ends of the cylindrical portion 31 is welded to the link 30. The cylindrical portion 31, namely the link 30, forms the vessel. The particles 41 are similar to those of the case shown in Fig. 7. The fill density is similar to that of the case shown in Fig. 7. The weight ratio of the inner and the outer particles 41 relative to the link 30 is 44%. With this construction, as the weight ratio of the particles 41 increases, the more the damping effect increases.

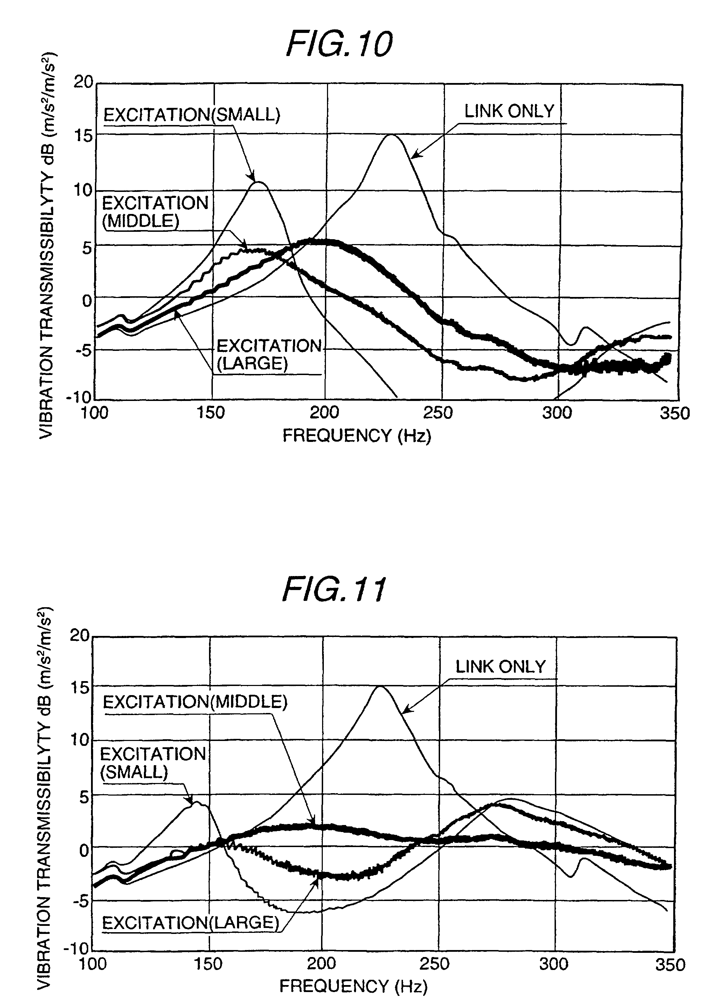

Next, referring to Fig. 9 and Fig. 10, the effect of the rubber sheet 46 will be explained. Since the vessels 42 of the damping apparatus 40 are fixed to the link 30 through the rubber sheet 46, the vessels 42 act as dynamic absorbers and the damping effect of the link 30 is increased.

Fig. 9 shows a case in which a thickness of the rubber sheet 46 is 3 mm, and Fig. 10 shows a case in which a thickness of the rubber sheet 46 is 1 mm. In both cases, the damping apparatus construction is similar to that shown in Fig. 7. With this construction, in the case of the thickness of the rubber sheet 45 of 3 mm the damping effect of about -7 dB can be obtained, and in the case of the thickness of the rubber sheet 45 of 1 mm the damping effect of about -9 dB can be obtained.

Referring to Fig. 11, the effect of the fastening force of the rubber sheet 46 will be explained. In this case, in comparison with that shown in Fig. 10, the fastening force of the bolt 47 is unfastened. However, the damping apparatus does not move easily in the rotation direction and the axial direction. The thickness of the rubber sheet 46 is 1 mm. With this construction, in a range in which the frequency is about 175 Hz to about 270 Hz, the vibration transmission ratio is reduced. The reason is that, with the intervening rubber sheet 46, frictional resistance generates on the face of the rubber sheet 46, and the damping effect according to the friction increases.

It is preferable to form plural layers of rubber sheet 46. For example, when the rubber sheet 46 is made of three layers, in the case of Fig, 9, the damping effect of -2 dB can be obtained.

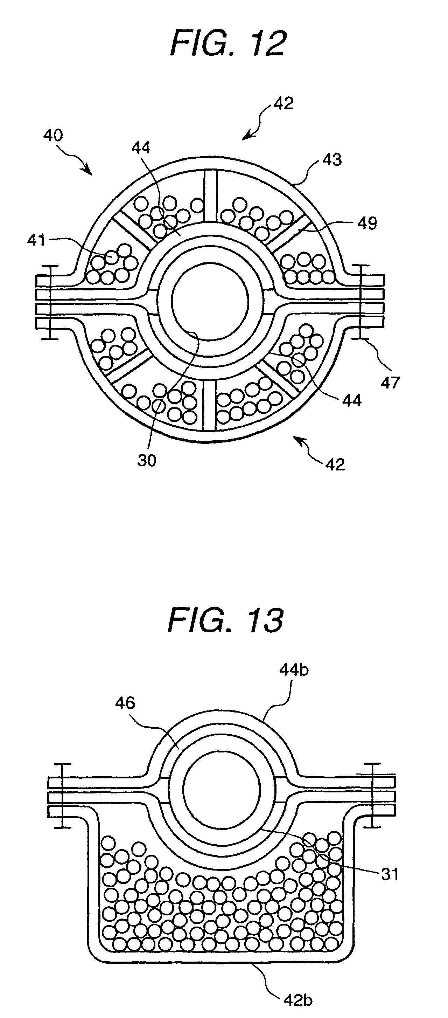

An embodiment shown in Fig. 12 will be explained. In the embodiment, the space occupied by the particles 41 is partitioned by a partition plate 49. The partition plate 49 is fixed to the inner side plate 44. With this construction, by the provision of the partition plate 49 the collision area with the particles 41 increases and a further damping effect can be obtained.

An embodiment shown in Fig. 13 will be explained. A vessel 42b is installed only at a lower face of the link 30. The cylindrical portion 31 is sandwiched by a plate which corresponds to the inner side plate 44 of the upper vessel 42 and the lower vessel 42b.

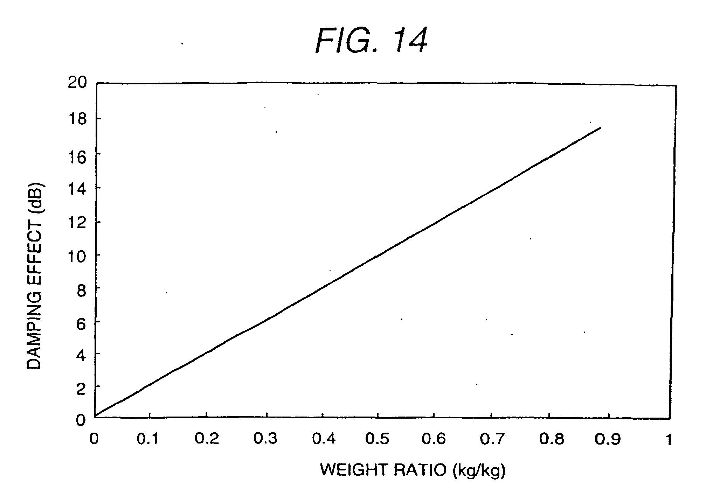

In the above described embodiments, the damping effect relative to the weight ratio of the particles to the link is summarized and shown in Fig. 14. It can be understood that the damping effect has a linear relationship against the weight ratio. When the weight ratio of the particle shape member against the link is 50%, the damping effect of about 10 db can be obtained.

It is preferable to mix particles having plural shapes into the one vessel. By this, in accordance with the increase of the weight ratio and the increase of the friction force the damping effect can be improved. The shapes in this case may differ in the particle diameter and the profile. It is unnecessary to use the sphere shapes. For example, there may be used a gourd shape, a multi-angular shape, and a shape having a recessed portion and a raised portion on a surface.

When there is the recessed portion and the raised portion on the surface, the contact area between the particles each other increases, and the damping effect increases. The particles having the recessed portion and the raised portion on the surface, for example, can be obtained by stirring the lead-based sphere shape particles using a blending machine.

From the experimentation using this, the damping effect in a modified shape particle is larger than that of the sphere shape particles. It is considered that the repulsion during the collision of the particles is small. Further, when the damping effect is the weight ratio, it is considered that the particles 41 may be formed by powder.

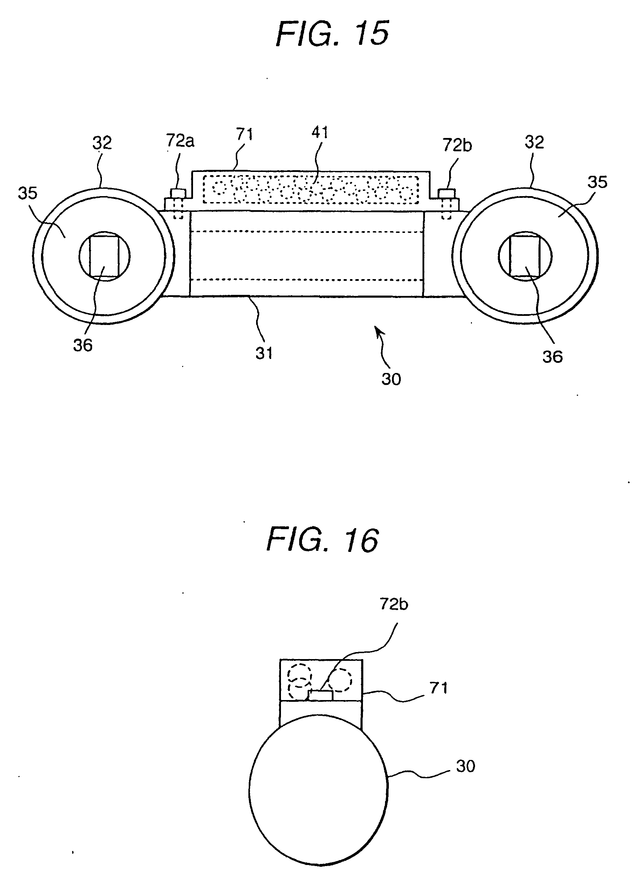

An embodiment shown in Figs. 15 and 16 will be explained. A damping apparatus 71 in which the particles 41 are enclosed is connected to the outer face of the cylindrical portion 31 of the link 30 by bolts 72a and 72b. This damping apparatus 71 can be removed easily and it is possible easily to exchange the apparatus. Further, it is possible to achieve easily the optimum arrangement of the damping apparatus 71.

## Claims

1. A railway vehicle connection member (30), for connecting between a railway car body (20) and a second car body or a bogie frame (11), **characterised in that** said connection member (30) has a container (40) mounted on said connection member (30) exteriorly thereof, said container (40) containing a mass of particles (41) in contact with each other and able to move relative to said connection member (30) so as to absorb vibration by collision, thereby to hinder vibration transmission to the car body (20), said particles (41, 62) having a specific gravity at least as high as that of iron.

2. A railway vehicle connection member according to claim 1, wherein said particles (41) are arranged to move in said container (40) in use backwards and forwards in the travel direction of the railway vehicle.

3. A railway vehicle connection member according to claim 1 or 2, wherein said particles are of lead-based material.

4. A railway vehicle connection member according to any one of claims 1 to 3, wherein said particles (41) have a plurality of different shapes.

5. A railway vehicle connection member according to any one of claims 1 to 4, wherein an elastomeric seat (46) is provided between said container (40) and said connection member (30).

6. A railway vehicle connection member according to claim 5, wherein said elastomeric seat (46) comprises plural layers of elastomeric material.

7. A railway vehicle having a car body (20) and a connection member (30) according to any one of claims 1 to 6, wherein said connection member (30) is a traction link, a damper or a bolster anchor.

8. A railway vehicle bogie having a connection member (30) according to any one of claims 1 to 6, for connection to a car body (20), and said connection member (30) carries said container (40) containing said movable particles (41).

## Patentansprüche

1. Schienenfahrzeug-Verbindungselement (30) zum Verbinden eines Schienenwagenkörpers (20) mit einem zweiten Wagenkörper oder einem Drehgestellrahmen (11), **dadurch gekennzeichnet, daß** das Verbindungselement (30) einen außen an dem Verbindungselement (30) befestigten Behälter (40) aufweist, der eine Menge Teilchen (41) enthält, die in Kontakt zueinander stehen und relativ zu dem Verbindungselement (30) bewegbar sind, um Vibrationen durch Kollisionen zu absorbieren, wodurch eine Vibrationsübertragung auf den Wagenkörper (20) unterbunden wird, wobei die Teilchen (41, 62) ein spezifisches Gewicht aufweisen, das wenigstens so hoch ist wie das von Eisen.

2. Schienenfahrzeug-Verbindungselement nach Anspruch 1, wobei die Teilchen (41) dazu angeordnet sind, sich in dem Behälter (40) in Gebrauch rück- und vorwärts in der Fahrtrichtung des Schienenfahrzeugs zu bewegen.

3. Schienenfahrzeug-Verbindungselement nach Anspruch 1 oder 2, wobei die Teilchen aus einem blei-basierten Material bestehen.

4. Schienenfahrzeug-Verbindungselement nach einem der Ansprüche 1 bis 3, wobei die Teilchen (41) mehrere unterschiedliche Formen haben.

5. Schienenfahrzeug-Verbindungselement nach einem der Ansprüche 1 bis 4, wobei eine elastomere Auflage (46) zwischen dem Behälter (40) und dem Verbindungselement (30) vorgesehen ist.

6. Schienenfahrzeug-Verbindungselement nach Anspruch 5, wobei die elastomere Auflage (46) mehrere Schichten Elastomermaterial aufweist.

7. Schienenfahrzeug mit einem Wagenkörper (20) und einem Verbindungselement (30) nach einem der Ansprüche 1 bis 6, wobei das Verbindungselement (30) eine Zugverbindung, eine Dämpfung oder ein Wiegeanker ist.

8. Schienenfahrzeug-Drehgestell mit einem Verbindungselement (30) nach einem der Ansprüche 1 bis 6 zum Verbinden mit einem Wagenkörper (20), wobei das Verbindungselement (30) den die bewegbaren Teilchen (41) enthaltenden Behälter (40) trägt.

## Revendications

1. Elément de raccordement de véhicule ferroviaire (30) destiné à une connexion entre une caisse de wagon ferroviaire (20) et une seconde caisse de wagon ou un châssis de bogie (11), **caractérisé en ce que** ledit élément de raccordement (30) a un conteneur (40) monté sur ledit élément de raccordement (30) à l'extérieur de celui-ci, ledit conteneur (40) contenant une masse de particules (41) en contact les unes avec les autres, et pouvant se déplacer par rapport audit élément de raccordement (30) de manière à absorber des vibrations par collision, pour empêcher ainsi une transmission des vibrations à la caisse de wagon (20), lesdites particules (41, 62) ayant un poids spécifique au moins aussi élevé que celui du fer.

2. Elément de raccordement de véhicule ferroviaire selon la revendication 1, dans lequel lesdites particules (41) sont agencées pour se déplacer dans ledit conteneur (40) en utilisation vers l'arrière et vers l'avant dans la direction de déplacement du véhicule ferroviaire.

3. Elément de raccordement de véhicule ferroviaire selon la revendication 1 ou 2, dans lequel lesdites particules sont un matériau à base de plomb.

4. Elément de raccordement de véhicule ferroviaire selon l'une quelconque des revendications 1 à 3, dans lequel lesdites particules (41) ont une pluralité de formes différentes.

5. Elément de raccordement de véhicule ferroviaire selon l'une quelconque des revendications 1 à 4, dans lequel un siège en élastomère (46) est agencé entre ledit conteneur (40) et ledit élément de raccordement (30).

6. Elément de raccordement de véhicule ferroviaire selon la revendication 5, dans lequel ledit siège en élastomère (46) comporte plusieurs couches de matériau élastomère.

7. Véhicule ferroviaire ayant une caisse de wagon (20) et un élément de raccordement (30) selon l'une quelconque des revendications 1 à 6, dans lequel ledit élément de raccordement (30) est une bielle de traction, un amortisseur ou un ancrage de traverse.

8. Bogie de véhicule ferroviaire ayant un élément de raccordement (30) selon l'une quelconque des revendications 1 à 6, destiné à un raccordement à une caisse de wagon (20), et ledit élément de raccordement (30) porte ledit conteneur (40) contenant lesdites particules mobiles (41).
